# EUROPÄISCHE PATENTSCHRIFT

(11) **EP 0 888 242 B1**
(45) Veröffentlichungstag und Bekanntmachung des Hinweises auf die Patenterteilung: **24.11.1999**
(21) Anmeldenummer: 97918001.5
(22) Anmeldetag: 03.03.1997
(51) Int. Cl.: B65H 29/58

(54) **VORRICHTUNG ZUM ÄNDERN DER TRANSPORTRICHTUNG VON EINZELBLÄTTERN**
DEVICE FOR CHANGING THE DIRECTION OF CONVEYANCE OF SINGLE SHEETS
DISPOSITIF DE CHANGEMENT DE LA DIRECTION D'ACHEMINEMENT DE FEUILLES INDIVIDUELLES

(30) Priorität: 13.03.1996 DE 19609890
(43) Veröffentlichungstag der Anmeldung: 07.01.1999
(73) Patentinhaber: Siemens Nixdorf Informationssysteme AG, 33106 Paderborn (DE)
(72) Erfinder: WEIGEL, Peter +di, +di (DE); TAUCHERT, Klaus, D-78052 Villingen-Schwenningen (DE); WEIGEL,Brigitte, D-33178 Borchen (DE); WEIGEL, Micaela, D-33098 Paderborn (DE); WEIGEL, Frederike, D-33178 Borchen (DE); WEIGEL, Gregor, D-33178 Borchen (DE)
(74) Vertreter: Epping, Wilhelm, Dr.-Ing.
(86) Internationale Anmeldenummer: DE9700379
(87) Internationale Veröffentlichungsnummer: WO9733823

(56) Entgegenhaltungen:
- EP-A- 0 113 326
- DE-A- 4 243 986
- US-A- 4 909 374
- PATENT ABSTRACTS OF JAPAN vol. 014, no. 113 (M-0944), 2.März 1990 & JP 01 313252 A (HITACHI LTD), 18.Dezember 1989,

## Beschreibung

Die Erfindung betrifft eine Vorrichtung zum Ändern der Transportrichtung von seriell transportierten rechteckigen Einzelblättern in einer Blattumlenkstation, die mindestens eine Einlaufbahn mit mindestens zwei Auslaufbahnen verbindet (z.B. DE 42 43 986 A1, EP 0 113 326 A1).

In Bearbeitungsgeräten zur Verarbeitung von Einzelblättern, insbesondere Banknotenautomaten ist es in der Regel erforderlich, an bestimmten Stellen in Abhängigkeit von vorgegebenen Kriterien zu entscheiden, in welche Richtung, d.h. zu welcher Station das Blatt transportiert werden soll. Dies erfolgt in der Regel durch Weichen, die in Abhängigkeit der vorgegebenen Kriterien geschaltet werden (z.B. DE 44 11 403 A1).

In bestimmten Fällen, wie beispielsweise bei Banknoten kann es jedoch erforderlich sein, die Richtung relativ zum Blattformat zu ändern, d.h. von einem Transport des Blattes in seiner Längsrichtung auf einen Transport quer zu seiner Längsrichtung umzuschalten und umgekehrt. Dies liegt daran, daß beispielsweise bei Banknoten bestimmte Bearbeitungsvorgänge, wie beispielsweise die Echtheitsprüfung einer Banknote, in der Regel erfordert, daß die Banknote das Prüfgerät in Längsrichtung durchläuft. Bei anderen Bearbeitungs- oder Handhabungsvorgängen ist es dagegen zweckmäßiger, wenn die Blätter oder Banknoten quer zu ihrer Längsrichtung transportiert werden.

In der EP 0 113 326 A1 ist deshalb bereits eine Umlenkstation vorgeschlagen worden, welche zwei zueinander im wesentlichen rechteckige flächige Führungselemente hat, die einen Führungsspalt zur Aufnahme eines Blattes zwischen sich begrenzen, wobei der Führungsspalt an einer Rechteckseite an die Einlaufbahn und an mindestens zwei weiteren Rechteckseiten an die Auslaufbahnen angeschlossen ist. Eines der Führungselemente hat mindestens eine Durchbrechung, in die eine um eine zur Ebene der Führungselemente parallele Achse drehbare und um eine zur Ebene der Führungselemente senkrechte Schwenkachse schwenkbare Reibrolle mit ihrer Umfangsfläche eingreift. Letztere ist zur Anlage an einem in dem Führungsspalt befindlichen Blatt bestimmt. Das zweite Führungselement hat gegenüber der jeweiligen Durchbrechung in dem ersten Führungselement ebenfalls eine Durchbrechung, durch die ein der Reibrolle zugeordnetes Andruckelement ragt, welches das in dem Führungsspalt befindliche Blatt gegen die Reibrolle drückt. Das Andruckelement ist als ebenfalls um eine zur Ebene der Führungselemente parallele Achse drehbare und um eine zur Ebene der Führungselemente senkrechte Schwenkachse schwenkbare Andruckrolle ausgebildet. Soll die Transportrichtung des Blattes in Richtung einer gegenüber der Einlaufbahn um 90° versetzten Richtung verändert werden, wird nicht nur die Reibrolle sondern auch die Andruckrolle geschwenkt. Da die Reibrolle an dem einen und die Andruckrolle an dem anderen Führungselement angebracht ist, wird für jede Rolle eine separate Stelleinrichtung benötigt.

Der Erfindung liegt die Aufgabe zugrunde, eine Vorrichtung der eingangs genannten Art anzugeben, die einfach in ihrem Aufbau ist und eine einfache und zuverlässige Umschaltung vom Längstransport in einen Quertransport und umgekehrt ermöglicht.

Diese Aufgabe wird erfindungsgemäß dadurch gelöst, daß das Andruckelement von einer frei drehbar gelagerten und in Richtung auf die Reibrolle federnd vorgespannten Kugel gebildet ist. Dadurch erhält man ein in seiner Wirkung von der Stellung der Reibrolle unabhängiges Andruckelement. Die Kugel kann sich in jeder Richtung mitdrehen, so daß das Andruckelement bei einer Stellungsänderung der Reibrolle nicht mitverstellt werden muß.

Die Reibrolle ist in einer Gabel um eine zur Ebene der Führungselemente parallele Achse drehbar gelagert und mittels eines Rollenantriebes antreibbar, die Gabel ist um eine zur Ebene der Führungselemente senkrechte Schwenkachse schwenkbar gelagert und durch einen Gabelantrieb zwischen zwei zueinander senkrechten Endstellungen verschwenkbar.

Befindet sich ein Blatt in der Umlenkstation, d.h. im Führungsspalt zwischen den Führungselementen, kann in Abhängigkeit vorgegebener Kriterien die Stellung der Reibrolle so gewählt werden, daß das Blatt entweder in seiner Längsrichtung oder quer zu dieser aus dem Führungsspalt heraustransportiert wird, wobei durch Wahl der Drehrichtung der Reibrolle insgesamt vier Auslaufrichtungen möglich sind.

Der Antrieb der Reibrolle in ihren beiden um 90° gegeneinander versetzten Stellungen kann auf unterschiedliche Weise verwirklicht werden. Gemäß einer ersten Ausführungsform ist an der Gabel koaxial zur Gabelschwenkachse ein Kegelrad angeordnet, an dem der Rollenantrieb angreift und das mit einem koaxial zur Reibrolle angeordneten und mit dieser drehfesten Kegelrad in Antriebsverbindung steht. Dabei kann die Antriebsverbindung dadurch erfolgen, daß die Kegelräder als Zahnräder ausgebildet sind und miteinander in Zahneingriff stehen, oder daß die Kegelräder als Reibräder ausgebildet sind. In der Regel wird man zum sicheren verkantungsfreien Transport der Blätter mehrere Reibrollen nebeneinander vorsehen, denen auch jeweils ein Andruckelement zugeordnet ist. In diesem Fall kann der Antrieb aller Reibrollen auf einfache Weise dadurch erfolgen, daß ein Treibriemen gleichzeitig über alle koaxial zur Gabelschwenkachse angeordneten Kegelräder geführt ist und diese gleichzeitig antreibt. Damit wird auf einfache Weise ein absoluter Gleichlauf der Reibrollen hinsichtlich Richtung und Geschwindigkeit erreicht.

Gemäß einer weiteren Ausführungsform wird vorgeschlagen, daß die Reibrolle drehfest mit einem Wellenzapfen verbunden ist, der in einer Endstellung der Reibrolle an einem Antriebsriemen anliegt, und daß der Reibrolle eine Treibwelle zugeordnet ist, die parallel zur Ebene der Führungselemente und zur Drehachse der Reibrolle in deren zweiter Endstellung gerichtet und so angeordnet ist, daß sie in der zweiten Endstellung der Reibrolle an deren Umfangsfläche anliegt. Auch mit dieser Lösung läßt sich auf sehr einfache Weise ein gleichzeitiger synchroner Antrieb mehrerer nebeneinander gelegener Reibrollen erzielen, wobei die Reibrollen in der einen Stellung durch den an den Wellenzapfen anliegenden Antriebsriemen und in der anderen Stellung durch die allen Reibrollen gemeinsame Treibwelle angetrieben werden. Sowohl das Verschwenken der Gabeln um ihre Schwenkachse als auch der Reibrollenantrieb kann auf präzise und leicht steuerbare Weise über Schrittmotoren erfolgen.

Um das Blatt in dem Führungsspalt exakt positionieren zu können, andererseits aber das Blatt in vier Richtungen aus dem Führungsspalt wieder heraustransportieren zu können, ist es zweckmäßig, daß mindestens an dem Rand des Führungsspaltes, der dem an die Einlaufbahn angeschlossenen Rand gegenüberliegt, ein Blattanschlag angeordnet ist, der mittels einer Stellvorrichtung zwischen einer Sperrstellung und einer Freigabestellung verstellbar ist. Das einlaufende Blatt läuft gegen diesen Anschlag. Wird das Blatt quer zur Einlaufsrichtung oder entgegengesetzt zur Einlaufsrichtung aus dem Führungsspalt heraustransportiert, bleibt der Anschlag in seiner Sperrstellung. Soll das Blatt dagegen in Einlaufrichtung aus dem Führungsspalt heraustransportiert werden, wird der Anschlag in seine Freigabestellung verstellt.

Weitere Merkmale und Vorteile der Erfindung ergeben sich aus der folgenden Beschreibung, welche in Verbindung mit den beigefügten Zeichnungen die Erfindung anhand von Ausführungsbeispielen erläutert. Es zeigen:
- Figur 1: eine schematische Skizze zur Erläuterung der Anordnung der erfindungsgemäßen Umlenkeinrichtung in einem Banknotenautomaten,
- Figur 2: eine schematische Teilschnittansicht durch eine erste Ausführungsform der erfindungsgemäßen Umlenkeinrichtung mit senkrecht zur Blattebene verlaufender Schnittebene,
- Figur 3: eine schematische perspektivische Darstellung der Reibrollen mit ihrem Rollenantrieb für die in Figur 2 dargestellte Ausführungsform in einer ersten Stellung der Reibrolle,
- Figur 4: eine der Figur 3 entsprechende Darstellung für eine zweite Stellung der Reibrollen und
- Figur 5: eine schematische Draufsicht auf die erfindungsgemäße Umlenkeinrichtung gemäß einer zweiten Ausführungsform der Erfindung.

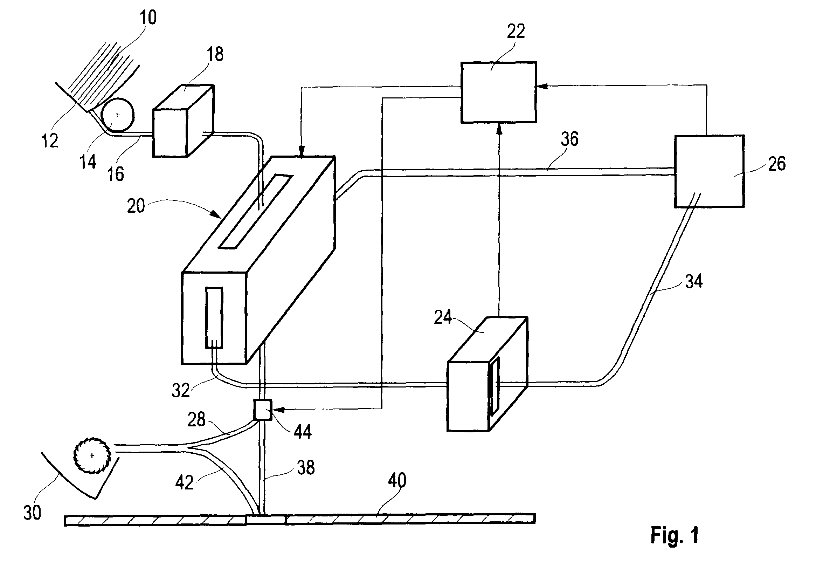

Anhand der Figur 1 soll zunächst die der Erfindung zugrundeliegende Problematik noch einmal schematisch anhand eines Banknotenein- und -ausgabeautomaten erläutert werden.

Die Länge von Banknoten ist in der Regel wesentlich größer als ihre Breite. Deutsche Banknoten sind beispielsweise cirka doppelt so lang wie breit. In Banknotenautomaten werden die Banknoten in der Regel in Querrichtung, d.h. quer zu ihrer Längsrichtung transportiert und in Geldkassetten gespeichert. Der Quertransport erlaubt eine höhere Transportfrequenz. Auf der anderen Seite müssen die Banknoten in der Regel ein Echtheitsprüfgerät in Längsrichtung durchlaufen, da nur so die Prüfkriterien der Banknote bei hoher Durchlaufgeschwindigkeit hinreichend zuverlässig erfaßt werden können. Die erfindungsgemäße Umlenkeinrichtung hat nun die Aufgabe, einen Übergang zwischen diesen beiden Transportrichtungen zu ermöglichen. Dies wird anhand der Figur 1 näher erläutert.

Ein Bankkunde legt beispielsweise ein Bündel von Banknoten 10 in ein Eingabefach 12 eines Banknotenautomaten. Aus dem Ein-gabefach 12 werden die Banknoten einzeln mittels einer Abzugsvorrichtung 14 abgezogen und einzeln in Querrichtung auf einer Transportbahn 16 durch eine Vorprüfungseinrichtung 18 einer Umlenkeinrichtung 20 zuge-führt. Die Umlenkeinrichtung 20 wird von einer Steuereinrichtung 22 gesteuert, welche Eingangssignale von der Vorprüfungseinrichtung 18, einer Echtheitsprüfeinrichtung 24 und einem Zwischenspeicher 26 erhält. Wird festgestellt, daß die Banknote die von der Vorprüfungseinrichtung 18 überprüften Kriterien nicht erfüllt, wird die Umlenkeinrichtung 20 so gesteuert, daß die Banknote die Umlenkeinrichtung in der Einführungsrichtung über eine Transportbahn 28 verläßt und zu einem Ausgabefach 30 transportiert wird, wo der Benutzer die Banknote wieder entnehmen kann. Dieser Transport erfolgt also ebenfalls in Querrichtung, d.h. die Banknote ändert ihre Transportrichtung bezüglich ihres Formates nicht.

Hat die Banknote dagegen die von der Vorprüfungseinrichtung 18 überprüften Kriterien erfüllt und soll auf Echtheit überprüft werden, so wird die Umlenkeinrichtung 20 so gesteuert, daß die Banknote die Umlenkvorrichtung nun in ihrer Längsrichtung über eine Transportbahn 32, d.h. senkrecht zur Einlaufrichtung verläßt und der Echtheitsprüfeinrichtung 24 zugeführt wird. Wird die Echtheit der Banknote bestätigt, gelangt die Banknote über eine Transportbahn 34 zum Zwischenspeicher 26, in dem sie gespeichert wird, bis sämtliche Banknoten 10 des eingelegten Bündels überprüft wurden. Ist das gesamte Bündel überprüft worden und für korrekt befunden worden, so gelangen die Banknoten einzeln über eine Transportbahn 36 wieder zur Umlenkeinrichtung 20 zurück, in die sie parallel zu ihrer Längsrichtung einlaufen. Anschließend wird die Umlenkeinrichtung 20 so gesteuert, daß die Banknoten einzeln quer zu ihrer Längsrichtung aus der Umlenkeinrichtung über eine Transportbahn 38 einem Tresor 40 des Banknotenautomaten zugeführt und dort in nicht dargestellten Kassetten abgelegt werden. Aus diesem Tresor können die Banknoten auf Anforderung über eine Transportbahn 42 dem Ausgabefach 30 zuge-führt werden. Das Umschalten zwischen den Transportbahnen 28 und 38 erfolgt über eine Weiche 44, die von der Steuereinrichtung 22 aus gesteuert wird.

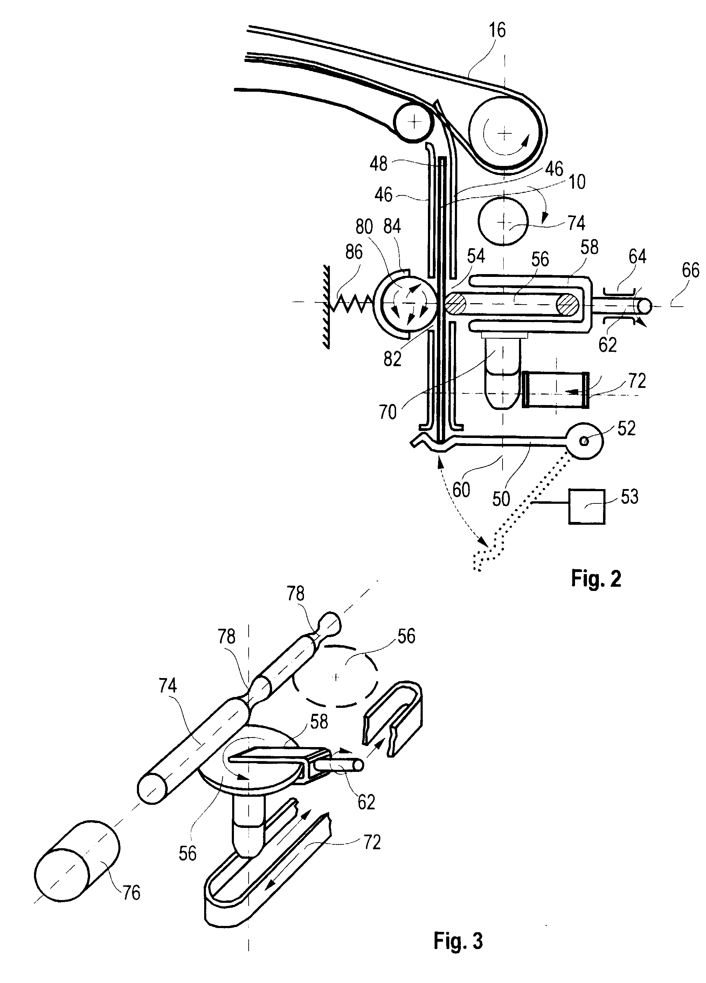

Anhand der Figuren 2 bis 4 wird nun der grundsätzliche Aufbau der Umlenkeinrichtung gemäß einer ersten Ausführungsform erläutert.

Die Umlenkeinrichtung hat zwei zueinander parallele flache Führungselemente 46, die von Platten oder Gittern gebildet sein können. Sie begrenzen zwischen sich einen Führungsspalt 48 zur Aufnahme einer Banknote 10. Das in Figur 2 obere Ende des Führungsspaltes ist an die Transportbahn 16 angeschlossen, die in herkömmlicher Weise von zwei miteinander zusammenwirkenden Riementrieben gebildet ist.

Das untere Ende des Führungsspaltes 48 ist durch eine Klappe 50 verschlossen, die um eine Achse 52 schwenkbar und zwischen der durch ausgezogene Linien wiedergegebenen Sperrstellung und der gestrichelt eingezeichneten Freigabestellung mittels einer Stellvorrichtung 53 verschwenkbar ist.

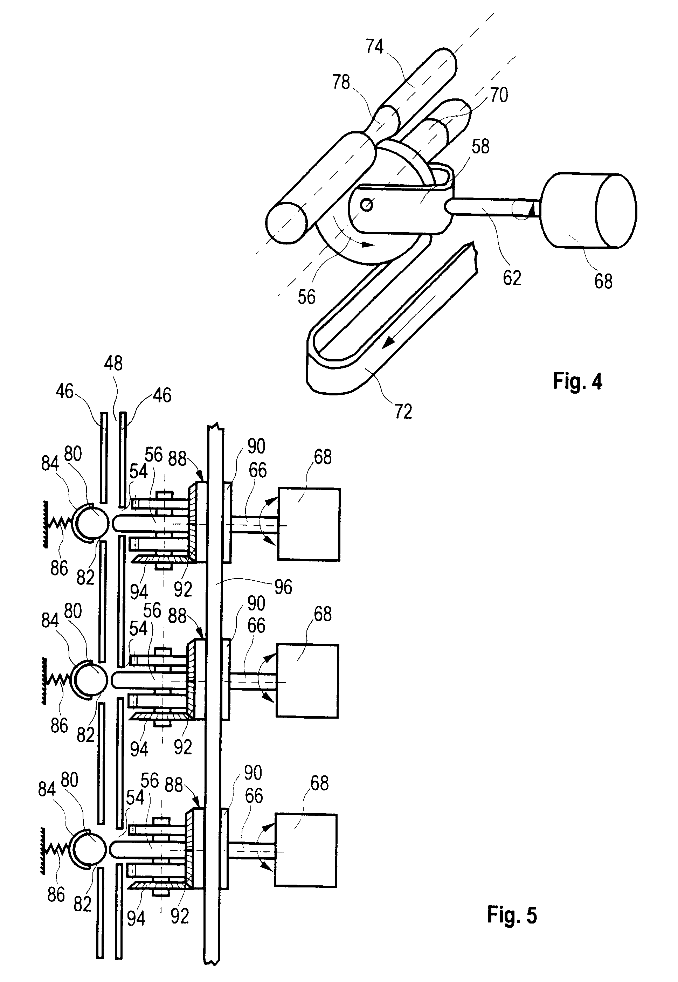

Das in Figur 2 rechte Führungselement 46 hat eine Durchbrechung 54, in welche eine Reibrolle 56 in der dargestellten Weise eingreift. Die Reibrolle 56 ist in einer Gabel 58 um eine zur Ebene der Führungselemente 46 parallele Achse 60 drehbar gelagert. Die Gabel 58 ihrerseits ist mittels einer Welle 62 in einem Lager 64 um eine zur Ebene der Führungselemente 46 senkrechte Achse 66 schwenkbar gelagert. Die Welle 62 ist mit einem Schrittmotor 68 verbunden, der von der Steuereinrichtung 22 gesteuert wird. Mit Hilfe des Schrittmotors 68 kann die Gabel 58 und damit die Reibrolle 56 zwischen den in den Figuren 3 und 4 dargestellten um ca. 90° verschiedenen Stellungen verschwenkt werden. Eine leichte Schrägstellung der Reibrolle 56 in der in den Figuren 2 und 3 dargestellten Stellung ist zweckmäßig, um das Blatt mit einem Rand gegen die Klappe 50 zu führen.

Die Reibrolle 56 ist drehfest mit einem Wellenzapfen 70 verbunden, der in der in den Figuren 2 und 3 dargestellten Stellung der Reibrolle 56 an einem Treibriemen 72 anliegt, der über einen nicht dargestellten Motor, beispielsweise ebenfalls einen Schrittmotor in beiden Richtungen antreibbar ist. Damit kann in der in den Figuren 2 und 3 dargestellten Stellung der Reibrolle diese so angetrieben werden, daß die in Figur 2 im Führungsspalt 48 stehende Banknote 10 senkrecht zur Bildebene bewegt werden kann.

Um die Reibrolle 56 auch in ihrer um 90° gedrehten Stellung antreiben zu können, die in Figur 4 dargestellt ist, ist oberhalb der Reibrolle 56 eine parallel zur Ebene der Führungselemente 46 gerichtete Treibwelle 74 angeordnet, die mittels eines Motors, beispielsweise Schrittmotors 76 in beiden Drehrichtungen antreibbar ist. Die Treibwelle hat im Bereich der Reibrolle 56 eine Einschnürung 78, sodaß das Schwenken der Reibrolle 56 aus der in der Figur 3 dargestellten Stellung in die in der Figur 4 dargestellte Stellung nicht behindert wird und die Reibrolle zumindest annähernd um 90° verschwenkt werden kann. Der Achsabstand zwischen der Treibwelle 74 und der Reibrolle 56 ist allerdings so gewählt, daß in der in der Figur 4 dargestellten Antriebsstellung ein zuverlässiger Friktionsantrieb zwischen der Treibwelle 74 und dem Umfang der Reibrolle 56 gewährleistet ist.

Wie in der Figur 3 angedeutet ist, sind in der Regel mehrere Reibrollen nebeneinander angeordnet, um die Banknote 10 verkantungsfrei transportieren zu können. Die vorstehende Beschreibung zeigt, daß dabei auch mehrere Reibrollen mit demselben Antriebsriemen 72 bzw. derselben Treibwelle 74 angetrieben werden können.

Jeder Reibrolle 56 ist eine Andruckkugel 80 zugeordnet, welche das in Figur 2 linke Führungselement 46 in einer Öffnung 82 durchsetzt und in einer Lagerschale 84 frei drehbar gelagert ist. Die Lagerschale 84 wird über eine Feder 86 gegen die Umfangsfläche des Reibrades 56 gespannt, sodaß eine zwischen die Kugel 80 und die Reibrolle 56 einlaufende Banknote 10 zuverlässig durch Reibschluß weitertransportiert werden kann.

Wie die vorstehende Beschreibung zeigt, kann durch Umschalten der Antriebsrichtung des Rollenantriebes (Treibriemen 72 bzw. Treibwelle 74 und durch Verschwenken der Gabel 58 zwischen den in den Figuren 3 und 4 dargestellten Stellungen eine in dem Führungsspalt 48 stehende Banknote 10 nach allen vier Rechteckseiten aus dem Führungsspalt 48 heraustransportiert werden. Ein wesentlicher Vorteil der erfindungsgemäßen Lösung liegt darin, daß auf einfache Weise eine Mehrzahl von Reibrollen ohne großen technischen Aufwand und Steuerungsaufwand synchron und zuverlässig angetrieben werden kann.

Figur 5 zeigt eine Antriebsvariante für die Reibrollen 56, wobei alle mit der in den Figuren 2 bis 4 dargestellten Ausführungsform übereinstimmenden Teile mit denselben Bezugszeichen versehen sind. Bei der in der Figur 5 dargestellten Ausführungsform ist auf der Gabel 58 koaxial zu ihrer Schwenkachse 66 ein Kegelrad 88 frei drehbar gelagert, das einen zylindrischen Abschnitt 90 und einen Kegelzahnradabschnitt 92 hat. Über letzteren steht das Kegelrad 88 mit einem Kegelzahnrad 94 in Eingriff, das drehfest mit der Reibrolle 56 verbunden ist. Die nebeneinander liegenden gleichartigen Reibrollen 56 werden alle gemeinsam über einen an den zylindrischen Abschnitten 90 der Kegelräder 88 anliegenden Treibriemen 96 angetrieben. Wie man erkennt, verändert sich bei einem Verschwenken der Gabeln 58 der Antriebsweg von den Kegelrädern 88 auf die Kegelräder 94 nicht. In beiden Stellungen der Reibrollen 56 können diese über den Treibriemen 96 angetrieben werden. Statt eines separaten Schritt¶ motors 68 für jede Reibrolle 56 kann auch ein allen Reibrollen 56 gemeinsamer Schrittmotor vorgesehen sein, der über einen Riemen oder eine Schubstange alle Gabeln 58 gemeinsam verschwenkt.

Die erfindungsgemäße Umlenkeinrichtung wurde vorstehend im Zusammenhang mit dem Umlenken der Transportrichtung von Banknoten erläutert. Sie ist selbstverständlich für alle Arten von rechteckigen Blättern verwendbar, bei denen zwischen einem Transport in Längsrichtung und einem Transport in Querrichtung der Blätter umgeschaltet werden soll.

## Patentansprüche

1. Vorrichtung zum Ändern der Transportrichtung von seriell transportierten rechteckigen Einzelblättern (10) in einer Blattumlenkstation (20), die mindestens eine Einlaufbahn (16) mit mindestens zwei Auslaufbahnen (28, 38 bzw. 32) verbindet, wobei die Blattumlenkstation (20) zwei zueinander parallele im wesentlichen rechteckige flächige Führungselemente (46) hat, die einen Führungsspalt (48) zur Aufnahme eines Blattes (10) zwischen sich begrenzen, wobei der Führungsspalt (48) an einer Rechteckseite an die Einlaufbahn (16) und an mindestens zwei weiteren Rechteckseiten an die Auslaufbahnen (28; 32) angeschlossen ist, eines der Führungselemente (46) mindestens eine Durchbrechung (54) hat, in die eine um eine zur Ebene der Führungselemente (46) parallele Achse (60) drehbare und um eine zur Ebene der Führungselemente (46) senkrechte Schwenkachse (66) schwenkbare Reibrolle (56) mit ihrer Umfangsfläche eingreift, die zur Anlage an einem in dem Führungsspalt (48) befindlichen Blatt (10) bestimmt ist, und daß das zweite Führungselement (46) gegenüber der jeweiligen Durchbrechung (54) in dem ersten Führungselement (46) eine Durchbrechung (82) hat, durch die ein der Reibrolle (56) zugeordnetes Andruckelement (80) ragt, dadurch **gekennzeichnet,** daß das Andruckelement (80) von einer frei drehbar gelagerten und in Richtung auf die Reibrolle (56) federnd vorgespannten Kugel gebildet ist.

2. Vorrichtung nach Anspruch 1, dadurch **gekennzeichnet,** daß die Reibrolle (56) in einer Gabel (58) um die Achse (60) drehbar gelagert und mittels eines Rollenantriebes (72, 74, 96) antreibbar ist, und daß die Gabel (58) um die Schwenkachse (66) schwenkbar gelagert und durch einen Gabelantrieb (68) zwischen zwei zueinander senkrechten Endstellungen verschwenkbar ist.

3. Vorrichtung nach Anspruch 2, dadurch **gekennzeichnet,** daß an der Gabel (58) koaxial zur Gabelschwenkachse (66) ein Kegelrad (88) angeordnet ist, an dem der Rollenantrieb (96) angreift und das mit einem koaxial zur Reibrolle (56) angeordneten und mit dieser drehfest verbundenen Kegelrad (94) in Antriebsverbindung steht.

4. Vorrichtung nach Anspruch 3, dadurch **gekennzeichnet,** daß die Kegelräder (88, 94) als Zahnräder ausgebildet sind, die miteinander in Eingriff stehen.

5. Vorrichtung nach Anspruch 3, dadurch **gekennzeichnet,** daß die Kegelräder (88, 94) als Reibräder ausgebildet sind.

6. Vorrichtung nach Anspruch 2, dadurch **gekennzeichnet,** daß die Reibrolle (56) drehfest mit einem Wellenzapfen (70) verbunden ist, der in einer ersten Endstellung der Reibrolle (56) an einem Antriebsriemen (72) anliegt, und daß der Reibrolle (56) eine Treibwelle (74) zugeordnet ist, die parallel zur Ebene der Führungselemente (46) und zur Drehachse (60) der Reibrolle (56) in deren zweiter Endstellung gerichtet und so angeordnet ist, daß sie in der zweiten Endstellung der Reibrolle (56) an deren Umfangsfläche anliegt.

7. Vorrichtung nach einem der Ansprüche 1 bis 6, dadurch **gekennzeichnet,** daß der Rollenantrieb (72, 74; 96) in seiner Antriebsrichtung umschaltbar ist.

8. Vorrichtung nach einem der Ansprüche 1 bis 7, dadurch **gekennzeichnet,** daß mindestens an dem Rand des Führungsspaltes (48), der dem an die Einlaufbahn (16) angeschlossenen Rand gegenüberliegt, ein Blattanschlag (50) angeordnet ist, der mittels einer Stellvorrichtung (53) zwischen einer Sperrstellung und einer Freigabestellung verstellbar ist.

9. Vorrichtung nach einem der Ansprüche 1 bis 8, dadurch **gekennzeichnet,** daß sie Teil einer Blattbearbeitungseinrichtung ist und daß der Rollenantrieb (72, 74; 96), der Gabelantrieb (68) und die Stellvorrichtung (53) mittels einer Steuereinrichtung (22) in Abhängigkeit von Signalen steuerbar sind, die von auf das Vorhandensein eines Blattes (10) und/oder Eigenschaften eines Blattes (10) ansprechenden Prüfeinrichtungen (18, 24) der Blattbearbeitungseinrichtung erzeugt werden.

## Claims

1. Device for changing the direction of conveyance of single rectangular sheets (10) that are conveyed in series in a sheet-turning station (20) which connects at least one entry track (16) to at least two exit tracks (28, 38 or 32), the sheet-turning station (20) having two essentially rectangular, flat, parallel guide elements (46) which delimit a guide gap (48) for accepting a sheet (10) between them, the guide gap (48) being connected at one rectangular side to the entry track (16) and at at least two further rectangular sides to the exit tracks (28; 32), one of the guide elements (46) having at least one aperture (54) in which a friction roller (56), which is rotatable about an axis (60) that is parallel to the plane of the guide elements (46) and pivotable about a pivot axis (66) that is perpendicular to the plane of the guide elements (46), engages with its peripheral surface, which is intended to rest on a sheet (10) located in the guide gap (48), the second guide element (46) having an aperture (82) which is opposite the respective aperture (54) in the first guide element (46) and through which there projects a pressure element (80) that is assigned to the friction roller (56), characterized in that the pressure element (80) is formed by a ball that is freely rotatably mounted and biased by a spring in the direction of the friction roller (56).

2. Device according to Claim 1, characterized in that the friction roller (56) is mounted in a fork (58) such that it is rotatable about the axis (60) and can be driven by means of a roller drive (72, 74, 96), and in that the fork (58) is mounted such that it is pivotable about the pivot axis (66), and can be pivoted by a fork drive (68) between two mutually perpendicular end positions.

3. Device according to Claim 2, characterized in that a bevel wheel (88) is arranged on the fork (58), coaxial with the fork pivot axis (66), the roller drive (96) acts on this bevel wheel and this bevel wheel has a drive connection to a bevel wheel (94) that is arranged coaxial with the friction roller (56) and is rotationally fixedly connected to the latter.

4. Device according to Claim 3, characterized in that the bevel wheels (88, 94) are designed as gear wheels which engage in each other.

5. Device according to Claim 3, characterized in that the bevel wheels (88, 94) are designed as friction wheels.

6. Device according to Claim 2, characterized in that the friction roller (56) is rotationally fixedly connected to a shaft journal (70) which, in a first end position of the friction roller (56), rests on a drive belt (72), and in that the friction roller (56) is assigned a drive shaft (74) which is directed parallel to the plane of the guide elements (46) and to the axis of rotation (60) of the friction roller (56) in the second end position of the latter and is arranged such that, in the second end position of the friction roller (56), it rests on the peripheral surface of the latter.

7. Device according to one of Claims 1 to 6, characterized in that the roller drive (72, 74; 96) can be changed over in its drive direction.

8. Device according to one of Claims 1 to 7, characterized in that, at least at that edge of the guide gap (48) that is situated opposite the edge connected to the entry track (16), there is arranged a sheet stop (50) which can be displaced between a blocking position and a release position by means of an actuating device (53).

9. Device according to one of Claims 1 to 8, characterized in that it is part of sheet-processing equipment and in that the roller drive (72, 74; 96), the fork drive (68) and the actuating device (53) can be controlled by means of a control device (22) as a function of signals which are generated by testing devices (18, 24) which belong to the sheet-processing equipment and react to the presence of a sheet (10) and/or properties of a sheet (10).

## Revendications

1. Dispositif pour changer la direction de transport de feuilles individuelles (10) rectangulaires transportées en série, dans un poste de renvoi de feuilles (20) qui relie au moins une voie d'entrée (16) à au moins deux voies de sortie (28, 38 ou 32), le poste de renvoi de feuilles (20) possédant deux éléments de guidage (46) plats, sensiblement rectangulaires et parallèles entre eux qui délimitent entre eux une fente de guidage (48) destinée à recevoir une feuille (10), la fente de guidage (48) étant raccordée sur un côté de l'angle droit à la voie d'entrée (16) et sur au moins deux autres côtés de l'angle droit aux voies de sortie (28 ; 32), l'un des éléments de guidage (46) possédant au moins un ajour (54) dans lequel pénètre par sa surface périphérique un galet de friction (56) qui est mobile en rotation autour d'un axe (60) parallèle au plan des éléments de guidage (46) et peut pivoter autour d'un axe de pivotement (66) perpendiculaire au plan des éléments de guidage (46), lequel galet de friction est destiné à prendre appui contre une feuille (10) se trouvant dans la fente de guidage (48) et le second élément de guidage (46) possédant, en vis-à-vis de l'ajour (54) du premier élément de guidage (46), un ajour (82) dans lequel pénètre un élément de pression (80) associé au galet de friction (56), **caractérisé** en ce que l'élément de pression (80) est formé par une bille qui est montée de façon à pouvoir tourner librement et est sollicitée par un ressort en direction du galet de friction (56).

2. Dispositif selon la revendication 1, **caractérisé** en ce que le galet de friction (56) est monté dans une fourche (58) avec possibilité de rotation autour de l'axe (60) et est entraîné au moyen d'un dispositif d'entraînement (72, 74, 96) et que la fourche (58) est montée de façon à pouvoir pivoter autour de l'axe de pivotement (66) et est entraînée par un dispositif d'entraînement (68) qui la fait pivoter entre deux positions terminales perpendiculaires entre elles.

3. Dispositif selon la revendication 2, **caractérisé** en ce qu'une roue conique (88) est montée sur la fourche (58), coaxialement avec l'axe de pivotement (66) de la fourche, roue conique sur laquelle agit le dispositif d'entraînement de galet (96) et qui est en liaison d'entraînement avec une roue conique (94) disposée coaxialement avec le galet de friction (56) et solidaire en rotation de ce dernier.

4. Dispositif selon la revendication 3, **caractérisé** en ce que les roues coniques (88, 94) sont réalisées sous forme de roues dentées qui s'engrènent.

5. Dispositif selon la revendication 3, **caractérisé** en ce que les roues coniques (88, 94) sont réalisées sous forme de roues de friction.

6. Dispositif selon la revendication 2, **caractérisé** en ce que le galet de friction (56) est solidaire en rotation d'un bout d'arbre (70) qui, dans une première position terminale du galet de friction (56), est en appui contre une courroie d'entraînement (72) et qu'il est associé au galet de friction (56) un arbre d'entraînement (74) qui est orienté parallèlement au plan des éléments de guidage (46) et à l'axe de rotation (60) du galet de friction (56) dans la seconde position terminale de celui-ci et est disposé de telle manière que dans la seconde position terminale du galet de friction (56), il prend appui contre la surface périphérique de celui-ci.

7. Dispositif selon une des revendications 1 à 6, **caractérisé** en ce que l'on peut inverser la direction d'entraînement du dispositif d'entraînement de galet (72, 74 ; 96).

8. Dispositif selon une des revendications 1 à 7, **caractérisé** en ce qu'au moins sur le bord de la fente de guidage (48) situé à l'opposé du bord raccordé à la voie d'entrée (16) est disposée une butée de feuille (50) qui peut être déplacée au moyen d'un dispositif de réglage (53) entre une position de blocage et une position de déblocage.

9. Dispositif selon une des revendications 1 à 8, **caractérisé** en ce qu'il fait partie d'un dispositif de traitement de feuilles et que le dispositif d'entraînement de galet (72, 74 ; 96), le dispositif d'entraînement de fourche (68) et le dispositif de réglage (53) peuvent être commandés au moyen d'un dispositif de commande (22) en fonction de signaux qui sont produits par des dispositifs de contrôle (18, 24) du dispositif de traitement de feuilles qui réagissent à la présence d'une feuille (10) et/ou à des propriétés d'une feuille (10).
